# EUROPÄISCHE PATENTANMELDUNG

(11) **EP 1 213 810 A1**
(43) Veröffentlichungstag der Anmeldung: **12.06.2002**
(21) Anmeldenummer: 01123543.9
(22) Anmeldetag: 29.09.2001
(51) Int. Cl.: H02G 3/08, H01R 13/52

(54) **Vorrichtung zur Elektroversorgung in einem Caravan**

(30) Priorität: 07.12.2000 DE 20020717 U
(71) Anmelder: ABL SURSUM BAYERISCHE ELEKTROZUBEHÖR GmbH & Co. KG, D-91207 Lauf (DE)
(72) Erfinder: Mann, Helmut, 91207 Lauf-Schönberg (DE); Maussner, Rainer, 91242 Ottensoos (DE); Wendler, Günther, 90542 Eckental-Eschenau (DE)
(74) Vertreter: Böhme, Volker, Dipl.-Ing.

(57) **Zusammenfassung**

Es gibt eine Vorrichtung, bei der ein Einspeisegerät 3 und ein Verteilergerät 5 vorgesehen sind. Dabei ist es erwünscht, wenn das Einspeisegerät und das Verteilergerät wahlweise vereinzelt bzw. räumlich voneinander getrennt einbaubar sind oder in einer Gesamtheit zusammengefaßt einbaubar sind. Dies ist erreicht, indem das Einspeisegerät 3 und das Verteilergerät 5 mechanisch und elektrisch zu einem zweigehäusigen Gesamtgerät zusammengefügt sind, indem das Einspeisegerät 3 mit einer Verlängerung 14 eines wandquerenden Bereichs 13 in eine Aufnahme 15 des Verteilergeräts 5 verstellbar hineingreift. Die Vorrichtung liegt also in zwei verschiedenen Zuständen vor. In dem einen Zustand sind die zwei Baueinheiten vereinzelt, um räumlich voneinander getrennt eingebaut zu werden. In dem zweiten Zustand sind die zwei Baueinheiten zu dem in sich starren Gesamtgerät zusammengefügt, das als Einheit eingebaut wird.

## Beschreibung

Die Erfindung betrifft eine Vorrichtung zur Elektroversorgung in einem Caravan, bei der ein Einspeisegerät und ein Verteilergerät vorgesehen sind, bei der das Einspeisegerät einen Stecker und einen wandquerenden Bereich umfaßt, bei der das Verteilergerät Anschlüsse für hohe Wechselspannung und Sicherungsmittel aufweist, bei der das Einspeisegerät und das Verteilergerät jeweils als eigenständige Baueinheiten mit einem eigenen Gehäuse ausgebildet sind und bei der zwischen dem Einspeisegerät und dem Verteilergerät elektrische Verbindungsmittel vorgesehen sind.

Diese Vorrichtung wird an bzw. in einem Caravan vorgesehen und wird an einer Wand des Caravans angebaut. Bei einer durch die Praxis bekannten Vorrichtung der eingangs genannten Art sind die zwei Baueinheiten Einspeisegerät und Verteilergerät im Caravan räumlich voneinander weit entfernt angeordnet und über lange Verbindungsleitungen miteinander verbunden. Das Einspeisegerät steht mit dem wandquerenden Bereich in der Regel gegen die Innenseite der Wand etwas vor, um verschiedene Wanddicken berücksichtigen zu können. Es ist baulich aufwendig, wegen des in der Regel wandinnenseitig etwas vorstehenden wandquerenden Wandbereichs bei der Herstellung des Caravans die zwei Baueinheiten einzeln und räumlich voneinander getrennt einzubauen. Andererseits gibt es Caravan-Typen, bei denen aus Unterbringungsgründen das Verteilergerät räumlich getrennt vom Einspeisegerät anzuordnen ist.

Eine Aufgabe der Erfindung ist es daher, eine Vorrichtung der eingangs genannten Art zu schaffen, bei der das Einspeisegerät und das Verteilergerät wahlweise vereinzelt bzw. räumlich voneinander getrennt einbaubar sind oder in einer Gesamtheit zusammengefaßt einbaubar sind. Die erfindungsgemäße Vorrichtung ist, diese Aufgabe lösend, dadurch gekennzeichnet, daß das Einspeisegerät und das Verteilergerät mechanisch und elektrisch zu einem zweigehäusigen Gesamtgerät zusammengefügt sind, indem das Einspeisegerät mit einer Verlängerung des wandquerenden Bereichs in eine Aufnahme des Verteilergerät verstellbar hineingreift.

Die erfindungsgemäße Vorrichtung liegt also in zwei verschiedenen Zuständen vor. In dem einen Zustand sind die zwei Baueinheiten vereinzelt, um räumlich voneinander getrennt eingebaut zu werden. Sie weisen die für diesen Einbau erforderlichen Ausgestaltungen auf und weisen elektrische Anschlüssen für im Caravan verlaufende Verbindungsleitungen auf. In dem zweiten Zustand sind die zwei Baueinheiten zu dem in sich starren Gesamtgerät zusammengefügt, das als Einheit eingebaut ist oder auch wird. Das Gesamtgerät weist die für diesen Einbau erforderlichen Ausgestaltungen auf; die zwei Baueinheiten sind mechanisch fest miteinander verbunden und auch die elektrischen Verbindungen der zwei Baueinheiten sind bereits vorhanden. Hierbei sind unter den Mitteln zur mechanischen Verbindung und den Mitteln zur elektrischen Verbindung der zwei Baueinheiten hervorzuheben die Verlängerung/Aufnahme-Gestaltung, die eine einfache Anpassung des wandquerenden Bereichs an verschiedene Wanddicken des Caravans ermöglicht. Bei der erfindungsgemäßen Vorrichtung sind die zwei Baueinheiten als Module gestaltet, die wahlweise gesondert voneinander einbaubar sind oder zusammengefügt zu dem funktionsfähigen Gesamtgerät einbaubar sind, wobei das Zusammenfügen in der Regel bei dem Hersteller dieses Gesamtgeräts erfolgt und nicht bei der Herstellung des Caravans erfolgen muß.

Besonders zweckmäßig und vorteilhaft ist es, wenn die elektrischen Verbindungsmittel zwischen der Verlängerung des wandquerenden Bereichs und der Aufnahme des Verteilergeräts vorgesehen und längenveränderbar sind. Durch die Längenveränderbarkeit sind auch die elektrischen Verbindungsmittel an verschiedene Wanddicken anpassbar. Die Vorrichtung ist also auch bezüglich der elektrischen Verbindungsmittel zwischen dem Einspeisegerät und dem Verteilergerät an verschiedene Wanddicken verschiedener Caravan-Typen angepaßt.

Besonders zweckmäßig und vorteilhaft ist es dabei, wenn die elektrischen Verbindungsmittel sich in dem Raum zwischen dem freien Ende der Verlängerung und dem Boden der Aufnahme befinden und zwischen dem freien Ende sowie dem Boden verlaufen. Dies vereinfacht die die elektrischen Verbindungsmittel betreffende Bauweise. Die längenveränderbaren Verbindungsmittel sind z. B. in Windungen verlaufende biegbare Drahtleiter oder sich überlappende, gegeneinander verschiebbare stiftartige Streifen, die sich kontaktieren.

Besonders zweckmäßig und vorteilhaft ist noch, wenn der wandquerende Bereich oder dessen Verlängerung mit einem Schraubloch versehen ist, dem ein Mutterngewinde der Aufnahme zugeordnet ist und in das eine durch das Schraubloch gesteckte Halteschraube geschraubt ist. Die Halteschraube verfestigt den Zusammenhalt des Einspeisegeräts und des Verteilergeräts. Sie ist z. B. in der Länge an die jeweilige Wanddicke bzw. den jeweiligen Abstand zwischen dem Schraubloch und dem Mutterngewinde angepaßt.

Das Einspeisegerät trägt in der Regel an dem wandaußenseitigen Ende des Gehäuses einen Flansch mit Deckel. Der Flansch ist mit Löchern zum Anschrauben an der Wand versehen. Bei der durch die Praxis bekannten Vorrichtung der eingangs genannten Art ist der Flansch an dem Gehäuse dauerhaft starr befestigt. Diese Gestaltung verlangt, daß das Einspeisegerät von der Wandaußenseite her an der Wand montiert wird und daß die elektrische Verbindung zwischen dem Einspeisegerät und dem Verteilergerät nachträglich an der Wand hergestellt wird, z. B. mittels der sich überlappenden, gegeneinander verschiebbaren stiftartigen Streifen, die sich kontaktieren.

Besonders zweckmäßig und vorteilhaft ist es nun, wenn ein einen Deckel tragender Flansch am wandaußenseitigen Ende des Einspeisegeräts als gesondertes Stück lose aufgesetzt sitzt und zwischen dem Flansch und dem Gehäuse eine Schnappverrastung/Schraubverbindung gebildet ist. Das Einspeisegerät und das Verteilergerät lassen sich als Baueinheit vorfertigen. Bei abgenommenem Flansch/Deckel wird das Gehäuse des Einspeisegeräts von der Wandinnenseite her durch das Loch der Wand gesteckt. Der mit dem Deckel versehene Flansch wird nachträglich von außen her aufgerastet oder mit dem wandaußenseitigen Ende verschraubt. Der Hersteller des Caravans ist von der mechanischen und insbesondere von der elektrischen Verbindung von Einspeisegerät und Verteilergerät befreit.

Besonders zweckmäßig und vorteilhaft ist es sodann, wenn die Anschlüsse für die Wechselspannung auf der dem freien Ende der Verlängerung gegenüberliegenden Seite des Bodens der Aufnahme angeordnet sind und/oder wenn die Sicherungsmittel an einer Seite der Aufnahme angeordnet sind, die den Anschlüssen für hohe Wechselspannung gegenüberliegt. Dies ist eine praktisch nützliche Verteilung der Bestandteile des Verteilergeräts im Hinblick auf die Aufnahme des Einspeisegeräts.

Besonders zweckmäßig und vorteilhaft ist es weiterhin, wenn das Gehäuse des Verteilergeräts ein den Sicherungsmitteln zugeordnetes Teilgehäuse und eine zweites Teilgehäuse umfaßt, das die Anschlüsse für hohe Wechselspannung überdeckend an der Aufnahme sitzt. Die Gehäusegestaltung erleichtert den Zugang zu den Anschlüssen der Anschlußleitungen.

Die Erfindung besteht sodann auch in einer Vorrichtung der eingangs genannten Art, die dadurch gekennzeichnet ist, daß dem zweigehäusigen Gesamtgerät aus dem Einspeisegerät und dem Verteilergerät ein Umformergerät zugeordnet ist, das zum Umformen einer hohen Wechselspannung in eine niedrige Gleichspannung ausgelegt ist, Anschlüsse für niedrige Gleichspannung aufweist und als eigenständige Baueinheit mit einem eigenen Gehäuse ausgebildet ist und daß das Verteilergerät sowie das Umformergerät über eine elektrische Buchse/Stift-Verbindung zu einem dreigehäusigen Gesamtgerät zusammengesteckt sind. Bei dieser Vorrichtung sind die drei Baueinheiten teilweise vereinzelt bzw. räumlich voneinander getrennt einbaubar oder zu einer Gesamtheit zusammengefaßt einbaubar.

Diese erfindungsgemäße Vorrichtung liegt auch in zwei verschiedenen Zuständen vor. In dem einen Zustand sind die drei Baueinheiten vereinzelt, um räumlich voneinander getrennt eingebaut zu werden. Sie weisen die für diesen Einbau erforderlichen Ausgestaltungen auf und weisen elektrische Anschlüsse für im Caravan verlaufende Verbindungsleitungen auf. In dem zweiten Zustand sind die drei Baueinheiten zu dem in sich starren Gesamtgerät zusammengefügt, das als Einheit eingebaut ist oder auch wird. Das Gesamtgerät weist die für diesen Einbau erforderlichen Ausgestaltungen auf; die drei Baueinheiten sind mechanisch fest miteinander verbunden und auch die elektrischen Verbindungen der drei Baueinheiten sind bereits vorhanden. Hierbei sind unter den Mitteln zur mechanischen Verbindung und den Mitteln zu elektrischen Verbindung der drei Baueinheiten hervorzuheben die Buchse/Stift-Verbindung, die das Zusammenfügen von Verteilergerät und Umformergerät vereinfacht, und die Verlängerung/Aufnahme-Gestaltung, die eine einfache Anpassung des wandquerenden Bereichs an verschiedene Wanddicken des Caravans ermöglicht. Bei der erfindungsgemäßen Vorrichtung sind die drei Baueinheiten als Module gestaltet, die wahlweise gesondert voneinander einbaubar sind oder zusammengefügt zu dem funktionsfähigen Gesamtgerät einbaubar sind, wobei das Zusammenfügen in der Regel bei dem Hersteller dieses Gesamtgeräts erfolgt und nicht bei dem Hersteller des Caravans erfolgen muß.

Besonders zweckmäßig und vorteilhaft ist es, wenn das Umformergerät die Anschlüsse für niedrige Gleichspannung - in Wandrichtung gesehen - neben Transformatormitteln oder über tragenden elektronischen Schaltnetzteilen und weiteren elektrischen/elektronischen Bauelementen aufweist und/oder wenn das Gehäuse des Umformergeräts ein den Transformatormitteln bzw. Schaltnetzteilen zugeordnetes Teilgehäuse und ein zweites Teilgehäuse umfaßt, das die Anschlüsse für niedrige Gleichspannung überdeckt. Dies ergibt eine vereinfachte Bauweise des in das Drei-Baueinheiten-Gesamtgerät integrierten Umformergeräts.

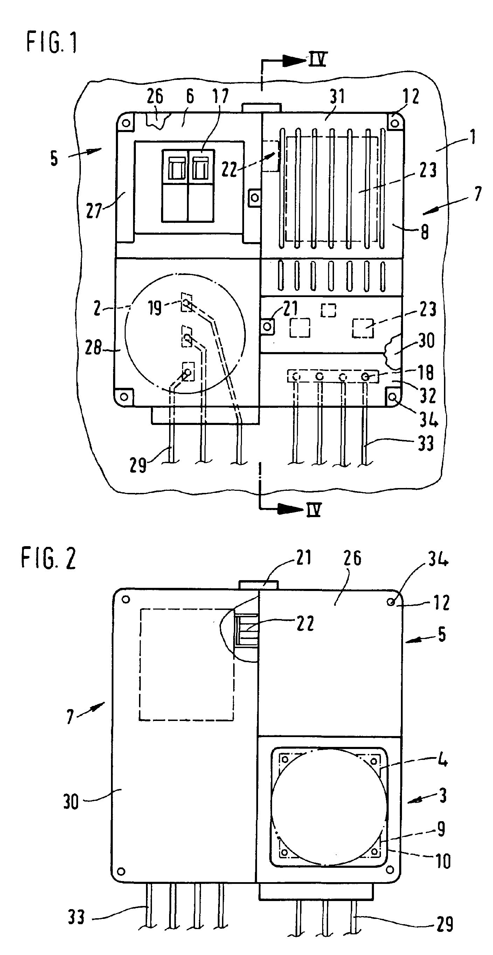

In der Zeichnung ist eine bevorzugte Ausführungsform der Erfindung dargestellt und zeigt
- Fig. 1: eine Vorderansicht einer Vorrichtung zur Elektroversorgung in einem Caravan,

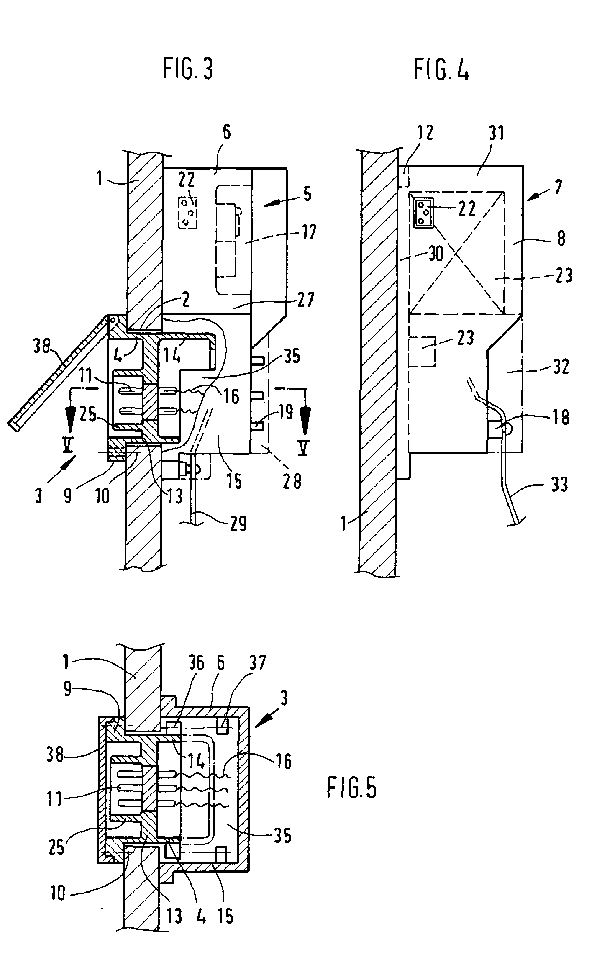

- Fig. 2: eine Rückansicht mit Aufbruch der Vorrichtung gemäß Fig. 1,
- Fig. 3: eine Seitenansicht mit Aufbruch der Vorrichtung gemäß Fig. 1,
- Fig. 4: eine gemäß Linie IV - IV in Fig. 1 und
- Fig. 5: einen Schnitt gemäß Linie V - V in Fig. 3.

Die Vorrichtung gemäß Zeichnung ist im Zustand eines Gesamtgeräts gezeigt, das an einer Wand 1 des Caravans angebracht ist, die einen Durchbruch 2 aufweist. Die Vorrichtung umfaßt ein Einspeisegerät 3 mit einem Gehäuse 4, ein Verteilergerät 5 mit einem Gehäuse 6 und ein Umformergerät 7 mit einem Gehäuse 8. Das Gesamtgerät ist, abgesehen von einem Flansch 9, von innen an die Wand 1 gesetzt, wobei das Einspeisegerät 3 mit seinem Gehäuse 4 durch den Durchbruch 2 gesteckt ist, so daß es etwas nach außen vorsteht. Auf dem vorstehenden Endbereich ist der Flansch 9 befestigt, der von außen mittels Schrauben 10 an der Wand 1 befestigt ist. Das Einspeisegerät 3 bildet einen nach außen hin weisenden Stecker 11, auf den eine nicht gezeigte Buchse steckbar ist und der einen umschließenden Kragen 25 aufweist. Das Gesamtgerät weist an den Gehäusen 6, 8 des Verteilergeräts 5 und des Umformergeräts 7 Stücke 12 auf, die ebenfalls mittels Schrauben 10 an der Wand befestigt sind.

Das Einspeisegerät 3 bildet einen wandquerenden Bereich 13 und daran anschließend eine Verlängerung 14, die sich auf der Innenseite der Wand 1 befindet, Die Verlängerung 14 ragt in eine buchsenartige Aufnahme 15, die von dem Verteilergerät 5 bzw. dessen Gehäuse 6 gebildet ist, und kann je nach Dicke der Wand verschieden tief in die topfartige Aufnahme ragen. In der Aufnahme 15 sind zwischen dem Verteilergerät 5 und dem Einspeisegerät 3 elektrische Verbindungsmittel 16 vorgesehen, die längenveränderbar sind, indem sich z. B. Kontaktstreifen verschieden weit überlappen. Das Verteilergerät 6 umfaßt Sicherungsmittel 17 und Anschlüsse 19 für hohe Wechselspannung. Das Umformergerät 7 weist Anschlüsse 18 für niedrige Gleichspannung auf.

Das Verteilergerät 5 und das Umformergerät 7 weisen zur rein mechanischen Verbindung Laschen 21 auf, die überlappen und die mittels Schrauben 10 verbunden sind. Weiterhin sind das Verteilergerät 5 und das Umformergerät 7 mittels einer Buchse/Stift-Verbindung 22 miteinander elektrisch verbunden. Die Buchsen und Stifte werden einfach ineinandergesteckt. Das Umformergerät 7 enthält Transformatormittel bzw. Schaltnetzteile 23 und weitere elektrische/elektronische Bauelemente 24.

Zu dem Gehäuse 6 des Verteilergeräts 5 gehören eine Rückplatte 26, an der ein erstes Teilgehäuse 27 und die topfartige Aufnahme 15 vorgesehen sind, und ein zweites Teilgehäuse 28, das die Anschlüsse 19 für hohe Wechselspannung überdeckt, von denen Anschlußleitungen 29 ausgehen. Zu dem Gehäuse 8 des Umformergeräts 7 gehören eine Rückplatte 30, an der ein erstes Teilgehäuse 31 und das Transformatormittel 23 vorgesehen sind, und ein zweites Teilgehäuse 32, das die Anschlüsse 18 für niedrige Gleichspannung überdeckt, von denen Anschlußleitungen 33 ausgehen. Die beiden Rückplatten 26 und 30 weisen Schraublöcher 34 auf, durch welche zwecks Befestigung nicht gezeigte Schrauben in die Wand 1 geschraubt werden . Zwischen dem freien Ende der Verlängerung 14 und dem Boden der Aufnahme 15 befindet sich ein Raum 35, in dem sich die elektrischen Verbindungsmittel 16 längenveränderbar erstrecken. Das Gehäuse 4 des Einspeisegeräts 3 trägt nach außen hin Nasen, die jeweils mit einem Schraubloch 36 versehen sind. An der Wandung der Aufnahme 15 sind Nasen vorgesehen, die jeweils mit einem Mutterngewinde 37 versehen sind. Der Flansch 10 trägt einen klappbaren Deckel 38.

## Patentansprüche

1. Vorrichtung zur Elektroversorgung in einem Caravan,
bei der ein Einspeisegerät und ein Verteilergerät vorgesehen sind, bei der das Einspeisegerät einen Stecker und einen wandquerenden Bereich umfaßt,
bei der das Verteilergerät Anschlüsse für hohe Wechselspannung und Sicherungsmittel aufweist,
bei der das Einspeisegerät und das Verteilergerät jeweils als eigenständige Baueinheit mit einem eigenen Gehäuse ausgebildet sind und
bei der zwischen dem Einspeisegerät und dem Verteilergerät elektrische Verbindungsmittel vorgesehen sind,
**dadurch gekennzeichnet,**
**daß** das Einspeisegerät (3) und das Verteilergerät (5) mechanisch und elektrisch zu einem zweigehäusigen Gesamtgerät zusammengefügt sind,
indem das Einspeisegerät (3) mit einer Verlängerung (14) des wandquerenden Bereichs (13) in eine Aufnahme (15) des Verteilergeräts (5) verstellbar hineingreift.

2. Vorrichtung nach Anspruch 1, **dadurch gekennzeichnet, daß** die elektrischen Verbindungsmittel (16) zwischen der Verlängerung (14) des wandquerenden Bereichs (13) und der Aufnahme (15) des Verteilergeräts (5) vorgesehen und längenveränderbar sind.

3. Vorrichtung nach Anspruch 2, **dadurch gekennzeichnet, daß** die elektrischen Verbindungsmittel (16) sich in dem Raum (35) zwischen dem freien Ende der Verlängerung (14) und dem Boden der Aufnahme (15) befinden und zwischen dem freien Ende sowie dem Boden verlaufen.

4. Vorrichtung nach Anspruch 1, 2 oder 3, **dadurch gekennzeichnet, daß** der wandquerende Bereich (13) oder dessen Verlängerung (14) mit einem Schraubloch (36) versehen ist, dem ein Mutterngewinde (37) der Aufnahme (15) zugeordnet ist und in das eine durch das Schraubloch gesteckte Halteschraube geschraubt ist.

5. Vorrichtung nach einem der vorhergehenden Ansprüche, **dadurch gekennzeichnet, daß** ein einen Deckel (38) tragender Flansch (9) am wand-außenseitigen Ende des Einspeisegeräts (3) als gesondertes Stück lose aufgesetzt sitzt und zwischen dem Flansch (9) und dem Gehäuse (7) eine Schnappverrastung oder eine Schraubverbindung gebildet ist.

6. Vorrichtung nach einem der vorhergehenden Ansprüche, **dadurch gekennzeichnet, daß** die Anschlüsse (19) für die hohe Wechselspannung auf der dem freien Ende der Verlängerung (14) gegenüberliegenden Seite des Bodens der Aufnahme (15) angeordnet sind.

7. Vorrichtung nach einem der vorhergehenden Ansprüche, **dadurch gekennzeichnet, daß** die Sicherungsmittel (17) an einer Seite der Aufnahme (15) angeordnet sind, die den Anschlüssen (19) für hohe Wechselspannung gegenüberliegt.

8. Vorrichtung nach einem der vorhergehenden Ansprüche, **dadurch gekennzeichnet, daß** das Gehäuse (6) des Verteilergeräts (5) ein den Sicherungsmitteln (17) zugeordnetes Teilgehäuse (27) und ein zweites Teilgehäuse (28) umfaßt, das die Anschlüsse (19) für hohe Wechselspannung überdeckend an der Aufnahme (15) sitzt.

9. Vorrichtung nach einem der vorhergehenden Ansprüche, **dadurch gekennzeichnet, daß** dem zweigehäusigen Gesamtgerät aus dem Einspeisegerät (3) und dem Verteilergerät (5) ein Umformergerät (7) zugeordnet ist, das zum Umformen einer hohen Wechselspannung in eine niedrige Gleichspannung ausgelegt ist, Anschlüsse (18) für niedrige Gleichspannung aufweist und als eigenständige Baueinheit mit einem eigenen Gehäuse (8) ausgebildet ist und daß das Verteilergerät (15) sowie das Umformergerät (7) über eine elektrische Buchse/Stift-Verbindung (22) zu einem dreigehäusigen Gesamtgerät zusammengesteckt sind.

10. Vorrichtung nach Anspruch 9, **dadurch gekennzeichnet, daß** das Umformergerät (7) die Anschlüsse (18) für niedrige Gleichspannung - in Wandrichtung gesehen - neben Transformatormitteln oder über tragenden elektronische Schaltnetzteilen (23) und weiteren elektrischen Bauelementen (24) aufweist.

11. Vorrichtung nach Anspruch 9 oder 10, **dadurch gekennzeichnet, daß** das Gehäuse (8) des Umformergeräts (7) ein den Transformatormitteln oder über tragenden elektronischen Schaltnetzteilen (23) zugeordnetes Teilgehäuse (31) und eine zweites Teilgehäuse (32) umfaßt, das die Anschlüsse (18) für niedrige Gleichspannung überdeckt.
